# EUROPEAN PATENT SPECIFICATION

(11) **EP 1 481 592 B1**
(45) Date of publication and mention of the grant of the patent: **25.06.2008**
(21) Application number: 04011996.8
(22) Date of filing: 20.05.2004
(51) Int. Cl.: A23G 3/00, A23G 3/20

(54) **Method of preparing roasted confectionery containing solid state center material**
Verfahren zur Zubereitung gerösteter Süsswaren mit einem festen Kern
Procédé pour la préparation des confiseries torréfiées comprenant un noyau solide

(30) Priority: 20.05.2003 JP 2003142760
(43) Date of publication of application: 01.12.2004
(73) Proprietor: Lotte Co., Ltd., Tokyo (JP)
(72) Inventor: Itou, Masanori, Misato Saitama (JP); Kodashima, Tetsuzou, Tokyo (JP); Koyama, Toshiyuki, Kawasaki Kanagawa (JP); Murakami, Kouji, Matsudo Chiba (JP)
(74) Representative: Westendorp, Michael Oliver

(56) References cited:
- EP-A- 0 086 319
- EP-A- 0 307 614
- EP-A- 0 951 845
- US-A- 1 809 383
- US-A- 2 404 177
- US-A- 4 812 323
- PATENT ABSTRACTS OF JAPAN vol. 011, no. 106 (C-414), 3 April 1987 (1987-04-03) & JP 61 257141 A (MEIJI SEIKA KAISHA LTD), 14 November 1986 (1986-11-14)

## Description

The present invention relates to a method of preparing a roasted confectionery containing a solid state center material such as a seed, a nut a fruit, or a molded confectionery with lipid, and more particularly to a method of preparing a roasted confectionery blended with a large amount of lipid and carbohydrate, wherein the roasted confectionery provides a soft taste.

There have been known some conventional methods of preparing a roasted confectionery containing a center material. In accordance with the first conventional method, a stuffing machine is used to draw, into a dough supply part, a base material such as a dough for an outside layer of the confectionery for molding the base material into a cylinder-shaped base material. The cylinder-shaped base material is pinched by a shutter, and then supplied with a solid state center material. The cylinder-shaped base material is then further pinched to be cut by the shutter, thereby forming the base material containing the solid state center material for the roasted confectionery.

In accordance with the second conventional method, a solid state center material is placed over a sheet of a base material with an optional thickness, which was formed by a press-extrusion. Another sheet of the base material is placed to overlap the sheet of the base material with the solid state center material. The overlapped sheets of the base material with the solid state center material is then cut by a cutter and further pressed to be adhered one another, thereby making the base material for the roasted confectionery contain the solid state center material. This second conventional method is disclosed in Japanese Patent Publication No. 2-62216.

In accordance with the third conventional method, a base material for a sponge confectionery is drawn into a pair of mold cavities as previously heated. The paired mold cavities are further heated independently without coming combined together so as to semi-roast the base materials for the sponge confectionery in the paired mold cavities. Cake crumbs or solid state lipid confectionery are then placed at least one of the semi-roasted base materials for the sponge confectionery in the paired mold cavities.

Finally, the paired mold cavities come combined together for full-roasting the semi-roasted base materials to form the sponge confectionery. This third conventional method is disclosed in Japanese laid-open patent publication No. 61-149048.

The above-described first conventional method has the following problems. This method takes a long time for molding the material, because the solid state center material is supplied or extruded into a center hold of the cylinder of the base material. The stuffing machine is unsuitable for simultaneously molding a large number of the material. A mass production may be made, wherein base materials placed in multiple lines or multiple alignments are roasted by an oven, wherein this needs the same number of the stuffing machines as the multiple lines or the multiple alignments. This first conventional method is inferior in productivity and takes a large space.

The above-described second method is unsuitable for producing the roasted confectionery which contains large amounts of lipid and carbohydrate because the base material is needed to have a high extensibility and a high adhesiveness for carrying a pair of upper and lower sheets of the base material before molding process. Namely, the base material should be selected to satisfy a variety of process conditions. Notwithstanding, this second method may be used for preparing the roasted confectionery such as a cracker and a pretzel which contains a small amount of or is free of lipid and carbohydrate. The process of cutting the overlapped sheets of the base materials produces unused parts of the base materials with a relatively large area. These unused parts should be re-cycled for the base material which provides a poor soft-taste and rather provides a hard taste.

The above-described third method may be applied by using specific base materials which are suitable for depositions over the molds, wherein sheets of the semi-roasted base material should have a high elasticity and a high adhesiveness. If surfaces of the sheets of the base material become hard upon roast, then the surface-harden sheets of the base materials can no longer contain the solid state material and come combined one another.

In the above circumstances, the development of a novel method of preparing a roasted confectionery containing a solid state center material free from the above problems is desirable.

Accordingly, it is an object of the present invention to provide a novel method of preparing a roasted confectionery containing a solid state center material free from the above problems.

It is a further object of the present invention to provide a novel method of preparing a roasted confectionery containing a solid state center material, wherein an outside material includes large amounts of lipid and carbohydrate, while a layer of the outside material contains the solid state center material such as a seed, a nut a fruit, or a molded confectionery with lipid.

It is a still further object of the present invention to provide a novel method of preparing a roasted confectionery containing a solid state center material, wherein the roasted confectionery provides a soft taste such as a biscuit and a cookie.

It is yet a further object of the present invention to provide a novel method of preparing a roasted confectionery containing a solid state center material, wherein the method is suitable for a mass production at a high yield.

A method of preparing a roasted confectionery containing a solid state center material is provided. The method comprises:
(1) a first step of forming a first piece of base material having a solid-state composition including 10-25 percents by weight of lipid and 14-30 percents by weight of carbohydrate and having a generally uniform thickness ;
(2) a second step of placing the first piece of base material over a lower mold die with a lower mold cavity so that a center of the first piece of base material is generally aligned to a center of the lower mold cavity;
(3) a third step of depressing a center of the first piece of base material into the lower mold cavity with leaving a periphery of the first piece of base material positioned outside the lower mold cavity, so as to form a depressed portion at the center of the first piece of base material ;
(4) a fourth step of placing a solid state center material over the depressed portion of the first piece of base material ;
(5) a fifth step of placing a second piece of base material over the solid state center material so that the second piece of base material superimposes the first piece of base material, wherein the second piece of base material has a solid-state composition including 10-25 percents by weight of lipid and 14-30 percents by weight of carbohydrate and the second piece of base material has generally similar shape and size to the first piece of base material ;
(6) a sixth step of causing a upper mold die with an upper mold cavity to press down the second piece of base material toward the lower mold die, so as to adhere the first and second pieces of base material with each other to form an outer layer completely containing the solid state center material, thereby to form a molded structure with a shape defined by the lower and upper mold cavities ;
(7) a seventh step of cutting peripheral portions of the first and second pieces of base material, wherein the peripheral portions are positioned outside the lower and upper mold cavities ;
(8) an eighth step of releasing the molded structure from the lower and upper mold cavities ; and
(9) a ninth step of roasting the molded structure to prepare a roasted confectionery containing the solid state center material.

It is also preferable that the third and fourth steps are carried out simultaneously by placing a solid state center material over the depressed portion of the first piece of base material and pressing down the solid state center material toward the lower mold cavity, so as to form the depressed portion of the first piece of base material.

It is also preferable that the sixth and seventh steps are carried out simultaneously.

It is also preferable that the molded structure is molded by a rotary molder.

It is also preferable that at least one of the lower and upper mold cavities has one selected from the group consisting of a semi-spherical shape, a semi-oval shape, a dome-shape, a lens-shape, a nut-shape, or a straw rice-bag shape.

It is also preferable that the solid state center material is selected from the group consisting of a nut, a seed, a molded lipid confectionery, a starch-based roasted confectionery, a grain-based roasted confectionery, and a sugar-coated confectionery.

The above and other objects, features and advantages of the present invention will be apparent from the following descriptions.

Preferred embodiments according to the present invention will be described in detail with reference to the accompanying drawings.

FIGS. 1A through 1G are cross sectional elevation views showing a series of processes for producing a roasted confectionery containing a solid state center material in Example 1 of the present invention.

FIGS. 2A and 2B are cross sectional elevation views showing a part of processes for producing a roasted confectionery containing a solid state center material in Example 2 of the present invention..

The following embodiments are typical examples for practicing the foregoing aspects of the present invention. Although the subject matters of the present invention have been described briefly, the following additional descriptions in one or more typical preferred embodiments or examples will be made with reference to the drawings for making it easy to understand the typical modes for practicing the foregoing aspects of the present invention.

### PREFERRED EMBODIMENT :

A preferred embodiment according to the present invention will be described in detail with reference to the drawings.

In accordance with the present invention, typical examples of main raw materials optionally available for the base material to be used for the roasted confectionery may include a variety of grains such as a wheat flour, a barley flour, and a rye flour ; and a variety of saccharides such as a sugar, maltose, a lactose, a glucose, a starch syrup, an invert sugar, an isomerized sugar, and a sugar alcohol ; and a variety of oils and fats such as a shortening, a butter, a margarine, a liquid oil, and a hardened oil. In addition to the above-described main raw materials, there may be used, as one or more additional raw materials, egg, a milk product, table salt, baking powders, flavors and a seasoning and a coloring material, by taking into account a taste and a flavor of the confectionery.

The roasted confectionery of the present invention includes large amounts of lipid and carbohydrate, thereby providing a soft taste as long as the above-described main and additional raw materials are used. Such the roasted confectionery may be classified into soft type biscuits or soft type cookies. It is, for example, preferable that the base material for the roasted confectionery has a solid-state composition which includes 10-25 percents by weight of lipid and 14-30 percents by weight of carbohydrate. In this case, the base material may also include approximately 3-16 percents by weight of protein. Those compositional ratios are mere example but should not be limitative. It is more preferable that the base material for the roasted confectionery has a solid state composition which includes 14-23 percents by weight of lipid and 16-25 percents by weight of carbohydrate.

If the compositional ratios of lipid and carbohydrate are out of the above-described preferable ranges, then it is possible that the following problems and disadvantages may be caused. If the compositional ratio of lipid or carbohydrate exceeds the above-described preferable ranges, then it is difficult to keep the shape of the base matter during the molding and roasting processes. Namely, it is possible that the base material is deformed during the molding and roasting processes, whereby it is difficult to keep the complete structure that the base material contains the center material perfectly or allow that the base material to be deformed during the roasting process. Otherwise, it is possible that the solid state center material is partially exposed.

If the compositional ratio of lipid or carbohydrate is less than the above-described preferable ranges, then it is difficult to provide a desired soft taste of the roasted confectionery as described with reference to the second conventional method, even this is suitable for the mass production.

In accordance with the present invention, the carbohydrate or sugar is defined to include monosaccharide such as glucose and fructose ; disaccharide such as sucrose, lactose, maltose and trehalose ; and, liquid sugar such as invert sugar syrup, honey syrup, maple syrup and isomerized sugar ; sugar alcohol such as sorbitol, xylitol, and maltitol, and further include sugars derived from the raw material composition such as lactose, but exclude starch such as wheat derived from grains, carbohydrate in whole egg and dietary fiber in cocoa powders.

The above-described raw material is added with a proper amount of water and then mixed and stirred to prepare a solid mass of base material. The solid mass of base material is then shaped to have a constant thickness and a size slightly larger than an opening size of a mold cavity as well as have a shape adopted to the shape of the opening of the mold cavity. Typical example of the shape of the base material may include, but not limited to, a disk shape. The thickness of the shaped base material may be optional and adjustable to a size and a shape of the solid state center material, and a composition of the base material as well as a desired quality of the final product. Typical and preferable example of the thickness of the shaped base material may be in the range of 1.5 millimeters to 5.0 millimeters. Typical examples of the method available for forming or shaping the base material may include a method of using a rotary mold to allow the base material to have a constant thickness, another method of using a depositor or a wire-cutter for quantitatively dividing the solid mass of base material into plural shaped base material, and still another method of using a roll to cause the solid mass of base material to extend and have predetermined thickness and shape. One preferable example of the method is to use a rotary mold for ensuring the shaped base material to have intended thickness and shape free of unintended variations, and also allow a full-use of the base material being rich in lipid and carbohydrate without waste.

It is preferable that the shaped base material is placed over the lower mold cavity, so that the center of the shaped base material is generally aligned to a center position of the lower mold cavity. Since the size of the shaped base mater is slightly larger than the opening size of the lower mold cavity, then a periphery of the shaped base material as placed is positioned out of the opening of the lower mold cavity. It is possible that a lower mold template comprises multiple alignments or multiple lines of plural mold cavities over a mold plate, wherein each of the mold cavities has desired size and shape. It is also possible that a lower mold template comprises a single separate mold cavity.

The placed base material is then depressed toward the bottom of the lower mold cavity so that the base material has a depressed portion in the lower mold cavity, so that the solid state center material is placed in the depressed portion. The method of forming the depressed portion should not be limited, but may include any available methods, for example, using a jig for depressing the base material or dropping the center material onto the center of the base material.

Other methods of forming the depressed portion may be that the solid state center material is placed at a center position of the base material, so as to cause the placed center material to depress the center of the base material toward the center bottom of the lower mold cavity. Namely, placing the solid state center material forms the depressed portion of the base material. This method is highly efficient.

A counterpart piece of the base material is prepared, which is generally identical in composition, shape and size to the above base material as placed over the lower mold cavity. The counterpart piece of the base material is then placed to superimpose the above base material as placed over the lower mold cavity, whereby the counterpart piece of the base material covers the solid state center material. A counterpart upper mold template with a mold cavity is pressed down and come combined together with the lower mold template, so that both the lower and upper pieces of the base material are adhered to one another, so that the solid state center material is perfectly contained in the combined and united piece of base material, wherein a peripheral portion of the combined and united piece of base material are positioned outside the paired upper and lower mold cavities. The peripheral portion of the combined and united piece of base material is then cut or removed by using a cutter. The process for cutting the peripheral portion of the combined and united piece of base material may be made by the molding process, wherein the paired upper and lower mold templates come combined together, provided that the upper mold template may have a cutting blade which has a contact face coming contact directly and tightly with the lower mold template.

It is possible that the paired upper and lower pieces of the base material may be either identical with or different from each other in composition. Difference in composition between the paired upper and lower pieces of the base material may provide variations in appearance and taste of the confectionery. Identification in composition between the paired upper and lower pieces of the base material may provide a high efficiency in use of the base material. The upper piece of the base material may comprise 10-25 percents by weight of lipid and 14-30 percents by weight of carbohydrate.

The molded piece of base material containing the solid state center material is released from the mold cavities and then roasted by an oven to prepare a roasted confectionery containing the solid state center material.

The shape of the mold cavity may be adjusted to a desired shape of the final product or to a desired shape of the solid state center material. Typical examples of the shape of the mold cavity may include, but not limited to, semi-sphere, semi-oval, dome, lens-shape, nut-shape, and a straw rice-bag shape.

The solid state center material should be in the solid state at the ordinary temperature. The solid state center material may be softened or dissolved and flowed in the roasting process, but should be solidified after the roasting process. Typical examples of the solid state center material may include, but not limited to, nuts and seeds such as almond, peanut, macadamia nut and dried fruit ; molded confectioneries with lipid such as a chocolate molded by a mold or a roll, dragee containing nuts or puff and a nut-crunch-containing chocolate ; starch-based roasted confectioneries such as rice-confectionery, biscuit, and pretzel ; sugar-coated confectioneries such as sugar-coated nut ; candy and tablet confectioneries, provided that the size and shape are somewhat stable.

The present invention allows the mass production, at a high efficiency and a high yield, of the roasted confectionery containing the solid state center material such as the nut and seed or the lipid-rich roasted confectionery providing a soft state.

### Example 1 :

100 parts by weight of wheat flour, 30 parts by weight of carbohydrate, 40 parts by weight of margarine, 5 parts by weight of whole milk powder, 5 parts by weight of whole egg, 0.5 parts by weight of table salt, 1 part by weight of sodium bicarbonate, 1 part by weight of ammonium carbonate, 0.2 parts by weight of vanilla essence, and 10 parts by weight of water were mixed and stirred to prepare a base material for a cookie.

The base material was then molded by a rotary molder to form a disk-shaped lower piece 1 of base material which has a diameter of 35 millimeters and a thickness of 4 millimeters.

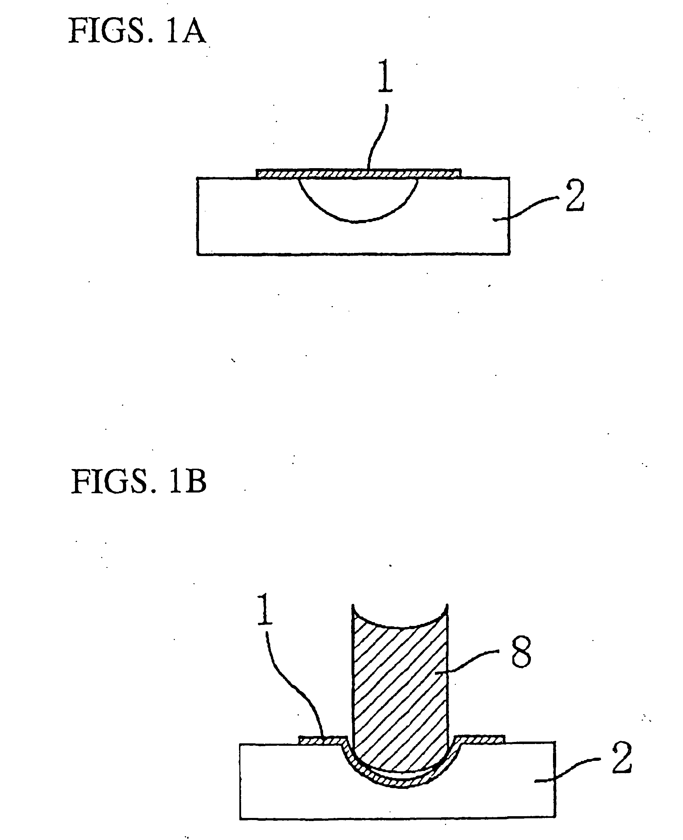

With reference to FIG. 1A, this molded disk-shaped lower piece 1 of base material was then placed over a lower mold cavity of a lower mold template 2 having a semi-spherical shape of a diameter of 25 millimeters.

With reference to FIG. 1B, a center of the molded disk-shaped lower piece 1 of base material was then depressed into the lower mold cavity of the lower mold template 2 by using a jig 8, whereby the lower piece 1 of base material has a depressed portion.

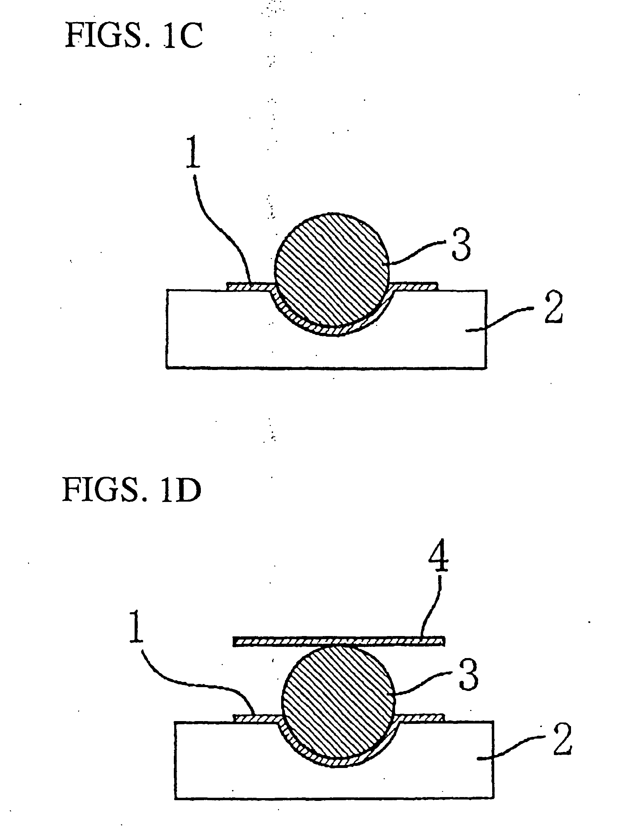

With reference to FIG. 1C, a solid state center material 3 comprising a chocolate ball of 18 millimeters in diameter was placed in the depressed portion of the lower piece 1 of base material, so that a center of the solid state center material 3 is aligned to a center of the lower mold cavity of the lower mold template 2.

With reference to FIG. 1D, a molded disk-shaped upper piece 4 of base material was placed over the solid state center material 3, so that a center of the molded disk-shaped upper piece 4 of base material is aligned to the center of the solid state center material 3. The molded disk-shaped upper piece 4 of base material had been prepared similarly to the molded disk-shaped lower piece 1 of base material.

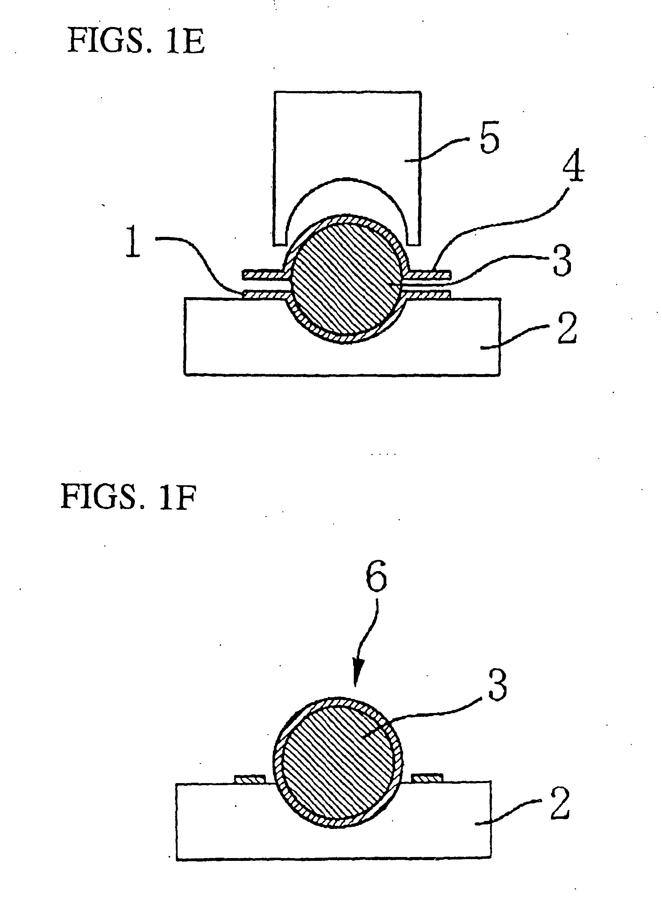

With reference to FIG. 1E, an upper mold template 5 with an upper cavity having a diameter of 25 millimeters and a cylinder-shaped cutter come combined with the lower mold template 2, whereby the lower piece 1 and the upper piece 4 of base material are adhered with each other and also cut out to separate peripheral portions of the lower piece 1 and the upper piece 4 of base material.

With reference to FIG. 1F, as a result of the above-described molding process, a molded structure 6 was formed, which comprises an outer layer of base material containing the solid state center material 3. The molded structure 6 has a diameter of 25 millimeters.

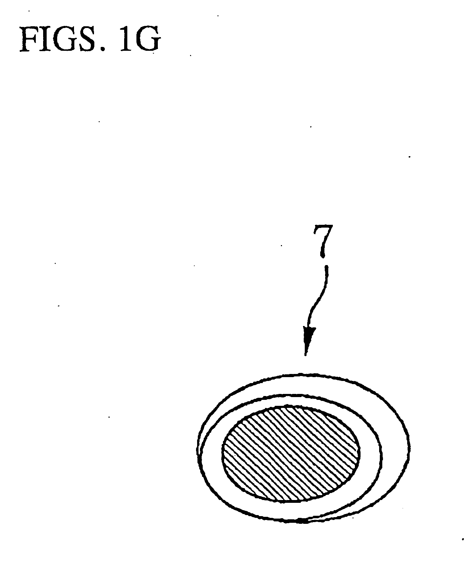

With reference to FIG. 1G, the molded structure 6 was then roasted at an upper side temperature of 200°C and a lower side temperature of 160°C, for 9 minutes, whereby a roasted confectionery 7 was prepared, which contains the solid state center material 3. The roasted confectionery 7 has a height of 24 millimeters and a diameter in horizontal direction of 34 millimeters. The outer layer of base material of the roasted confectionery 7 includes 23.0 percents by weight of lipid, 20.4 percents by weight of carbohydrate and 6.4 percents by weight of protein. It was confirmed that the roasted confectionery 7 has such a smooth surface as hand-made and a crisp and good taste.

### Example 2 :

100 parts by weight of wheat flour, 25 parts by weight of sugar, 30 parts by weight of shortening, 5 parts by weight of whole milk powder, 15 parts by weight of whole egg, 30 parts by weight of starch syrup, 1 part by weight of table salt, 0.5 parts by weight of sodium bicarbonate, 1.5 parts by weight of ammonium carbonate, 0.1 part by weight of vanilla essence, and 10 parts by weight of water were mixed and stirred to prepare a first base material for a cookie.

100 parts by weight of wheat flour, 20 parts by weight of sugar, 30 parts by weight of shortening, 5 parts by weight of whole milk powder, 5 parts by weight of cocoa powders, 15 parts by weight of whole egg, 30 parts by weight of starch syrup, 1 part by weight of table salt, 0.5 parts by weight of sodium bicarbonate, 1.5 parts by weight of ammonium carbonate, 0.1 part by weight of chocolate essence, and 13 parts by weight of water were mixed and stirred to prepare a second base material for a cookie.

The first and second base materials were then molded by a rotary molder to form disk-shaped lower and upper pieces of the first and second base materials which have a diameter of 42 millimeters and a thickness of 5 millimeters, wherein the first and second base materials were extruded from a cylinder of 42 millimeters in diameter and then cut by a wire.

The molded disk-shaped lower piece of the first base material was then placed over a lower mold cavity of a lower mold template having an oval shape of a long diameter of 31 millimeters and a short diameter of 21 millimeters.

A solid state center material comprising a single piece of almond was placed at a center of the molded disk-shaped lower piece of the first base material and then pushed down toward the center of the lower mold cavity of the lower mold template, so that the center of the molded disk-shaped lower piece 1 of the first base material and the solid state center material were depressed in the lower mold cavity of the lower mold template. The single piece of almond as the solid state center material has a long diameter of 22 millimeters and a short diameter of 12 millimeters.

The molded disk-shaped upper piece of the second base material was placed over the single piece of almond as the solid state center material, so that a center of the molded disk-shaped upper piece of the second base material is aligned to the center of the single piece of almond as the solid state center material.

An oval-shaped nozzle-like jig having a long diameter of 31 millimeters and a short diameter of 21 millimeters was used to cause that the lower piece and the upper piece of the first and second base materials were adhered with each other. Subsequently, an oval-shaped cutter having a long diameter of 31 millimeters and a short diameter of 21 millimeters was used to separate peripheral portions of the lower piece and the upper piece of the first and second base materials, resulting in that a molded structure was formed, which comprises an outer layer of base material containing the solid state center material, wherein the outer layer comprises a lower half portion comprising the first base material and an upper half portion comprising the second base material. The molded structure has a long diameter of 31 millimeters, a short diameter of 21 millimeters and a height of 18 millimeters.

The molded structure was then roasted at an upper side temperature of 180°C and a lower side temperature of 160°C, for 11 minutes, whereby a roasted confectionery was prepared, which contains the single piece of almond. The roasted confectionery comprises upper and lower half portions different in color and material. The lower half part of the outer layer of the first base material of the roasted confectionery includes 20.0 percents by weight of lipid, 28.5 percents by weight of carbohydrate and 6.4 percents by weight of protein. The upper half part of the outer layer of the second base material of the roasted confectionery includes 20.4 percents by weight of lipid, 25.7 percents by weight of carbohydrate and 7.1 percents by weight of protein. It was confirmed that the roasted confectionery provides a soft and good taste.

### Example 3 :

100 parts by weight of wheat flour, 20 parts by weight of sugar, 12 parts by weight of shortening, 5 parts by weight of whole milk powder, 1 parts by weight of table salt, 1 part by weight of sodium bicarbonate, 4 part by weight of ammonium carbonate, 0.1 parts by weight of vanilla essence, and 20 parts by weight of water were mixed and stirred to prepare a base material for biscuit.

The base material was then molded by a rotary molder to form disk-shaped lower and upper pieces of base material which has a diameter of 30 millimeters and a thickness of 2 millimeters.

This molded disk-shaped lower piece of base material was then placed over a lower mold cavity of a lower mold template having a semi-spherical shape of a diameter of 20 millimeters.

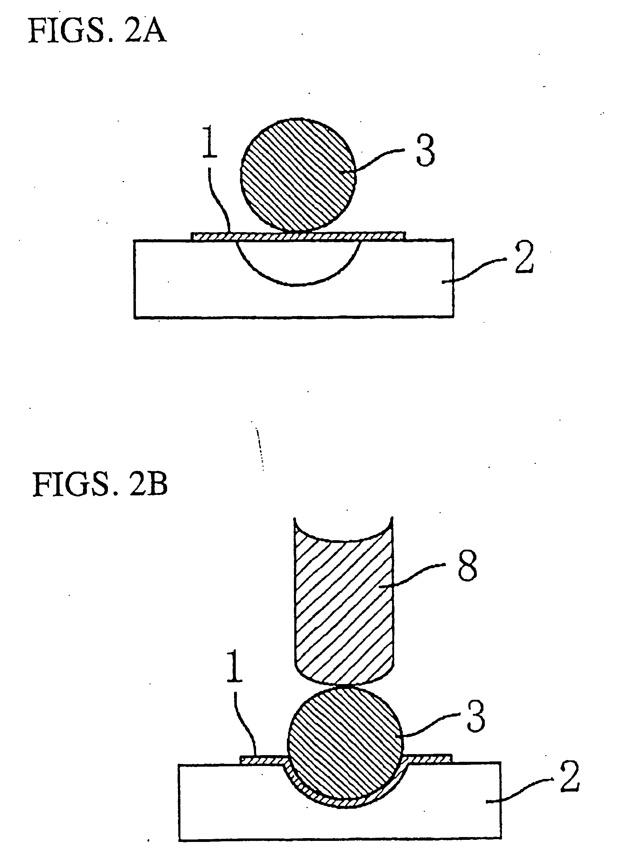

With reference to FIG. 2A, a solid state center material comprising a chocolate ball of 16 millimeters in diameter containing 10 percents by weight of puff was placed over the lower piece of base material, so that a center of the solid state center material is aligned to a center of the lower mold cavity of the lower mold template.

With reference to FIG. 2B, a center of the solid state center material was then depressed into the lower mold cavity of the lower mold template by using a pressing die 8 having a semi-spherically rounded top with a diameter of 16 millimeters, whereby the center of the lower piece of base material and the solid state center material were depressed into the lower mold cavity of the lower mold template.

A molded disk-shaped upper piece of base material was placed over the solid state center material, so that a center of the molded disk-shaped upper piece of base material is aligned to the center of the solid state center material.

An upper mold template with an upper cavity having a diameter of 20 millimeters and a cylinder-shaped cutter come combined with the lower mold template, whereby the lower piece and the upper piece of base material are adhered with each other and also cut out to separate peripheral portions of the lower piece and the upper piece of base material, resulting in that a molded ball structure was formed, which has a diameter of 20 millimeters.

The molded ball structure was then roasted at an upper side temperature of 180°C and a lower side temperature of 160°C, for 7 minutes, whereby a roasted confectionery was prepared, which contains the solid state center material. The roasted confectionery has a height of 20 millimeters and a diameter in horizontal direction of 27 millimeters.

The outer layer of base material of the roasted confectionery includes 12.1 percents by weight of lipid, 17.1 percents by weight of carbohydrate and 8.0 percents by weight of protein. It was confirmed that the roasted confectionery has such a smooth surface as hand-made and a crisp and good taste.

### Example 4 :

100 parts by weight of wheat flour, 30 parts by weight of sugar, 30 parts by weight of shortening, 5 parts by weight of whole milk powder, 10 parts by weight of whole egg, 5 parts by weight of starch syrup, 1 part by weight of table salt, 0.5 parts by weight of sodium bicarbonate, 0.5 parts by weight of ammonium carbonate, 0.1 part by weight of vanilla essence, and 5 parts by weight of water were mixed and stirred to prepare a first base material for cookie.

100 parts by weight of wheat flour, 30 parts by weight of sugar, 30 parts by weight of shortening, 10 parts by weight of whole milk powder, 5 parts by weight of cocoa powders, 10 parts by weight of whole egg, 5 parts by weight of starch syrup, 1 part by weight of table salt, 0.5 parts by weight of sodium bicarbonate, 1.0 parts by weight of ammonium carbonate, 0.1 part by weight of vanilla essence, and 15 parts by weight of water were mixed and stirred to prepare a second base material for cookie.

The first and second base materials were then molded by a rotary molder to form disk-shaped lower and upper pieces of the first and second base materials which have a diameter of 42 millimeters and a thickness of 5 millimeters, wherein the first and second base materials were extruded from a cylinder of 42 millimeters in diameter and then cut by a wire.

The molded disk-shaped lower piece of the first base material was then placed over a lower mold cavity of a lower mold template having an oval shape of a long diameter of 31 millimeters and a short diameter of 21 millimeters.

A solid state center material comprising a single piece of almond was placed at a center of the molded disk-shaped lower piece of the first base material and then pushed down toward the center of the lower mold cavity of the lower mold template, so that the center of the molded disk-shaped lower piece 1 of the first base material and the solid state center material were depressed in the lower mold cavity of the lower mold template. The single piece of almond as the solid state center material has a long diameter of 22 millimeters and a short diameter of 12 millimeters.

The molded disk-shaped upper piece of the second base material was placed over the single piece of almond as the solid state center material, so that a center of the molded disk-shaped upper piece of the second base material is aligned to the center of the single piece of almond as the solid state center material.

An oval-shaped nozzle-like jig having a long diameter of 31 millimeters and a short diameter of 21 millimeters was used to cause that the lower piece and the upper piece of the first and second base materials were adhered with each other. Subsequently, an oval-shaped cutter having a long diameter of 31 millimeters and a short diameter of 21 millimeters was used to separate peripheral portions of the lower piece and the upper piece of the first and second base materials, resulting in that a molded structure was formed, which comprises an outer layer of base material containing the solid state center material, wherein the outer layer comprises a lower half portion comprising the first base material and an upper half portion comprising the second base material. The molded structure has a long diameter of 31 millimeters, a short diameter of 21 millimeters and a height of 18 millimeters.

The molded structure was then roasted at an upper side temperature of 180°C and a lower side temperature of 160°C, for 11 minutes, whereby a roasted confectionery was prepared, which contains the single piece of almond. The roasted confectionery comprises upper and lower half portions different in color and material.

The lower half part of the outer layer of the first base material of the roasted confectionery includes 20.6 percents by weight of lipid, 21.5 percents by weight of carbohydrate and 6.3 percents by weight of protein. The upper half part of the outer layer of the second base material of the roasted confectionery includes 20.4 percents by weight of lipid, 21.4 percents by weight of carbohydrate and 7.3 percents by weight of protein. It was confirmed that the roasted confectionery provides a soft and good taste and a crispy taste like almond.

### Comparative Example 1 :

100 parts by weight of wheat flour, 30 parts by weight of sugar, 10 parts by weight of margarine, 25 parts by weight of shortening, 5 parts by weight. of whole milk powder, 20 parts by weight of whole egg, 0.5 part by weight of table salt, 1 part by weight of sodium bicarbonate, 1 part by weight of ammonium carbonate, 0.1 parts by weight of vanilla essence, and 3 parts by weight of water were mixed and stirred to prepare a base material for biscuit.

The base material was then extended by triple-staged extension rolls to form a lower sheet of base material which has a thickness of 2 millimeters.

This lower sheet of base material was then placed over a lower mold plate having a semi-spherical shaped cavity of a diameter of 20 millimeters.

The lower sheet of base material was depressed into the semi-spherical shaped cavity by a roll having a semi-spherical shaped projection which is engaged with the semi-spherical shaped cavity, so that the lower sheet of base material has a depressed portion.

A solid state center material comprising a chocolate ball was placed over the depressed portion of the lower sheet of base material, so that a center of the solid state center material is aligned to a center of the lower mold cavity of the lower mold plate.

A upper sheet of base material, which had been prepared similarly to the lower sheet of base material, was placed over the solid state center material.

A circle-shaped cutter being engaged with the lower mold cavity and having a diameter of 20 millimeters was used, whereby the lower piece and the upper piece of base material are adhered with each other and also cut out to separate peripheral portions of the lower piece and the upper piece of base material, resulting in that a molded structure was formed, which comprises an outer layer of base material containing the solid state center material.

The cut peripheral portions as remainder were re-cycled. Since the base material has excess compositional ratios of lipid and carbohydrate, then a disconnection or a break of the re-cycled base material as well as an undesired adhesion of the re-cycled base material to a belt or a mold plate. A difficulty of continuous molding was confirmed. Further, it was confirmed that separation of lipid component appears in the base material including the re-cycled base material. Poor extensibility of the base material including the re-cycled base material was also confirmed. Further more, increased adhesiveness of the base material including the re-cycled base material to the roll as well as break thereof were also confirmed. It was no longer possible to form a desired sheet of the base material. The base material includes 24.0 percents by weight of lipid, 20.0 percents by weight of carbohydrate and 7.3 percents by weight of protein.

### Comparative Example 2 :

100 parts by weight of wheat flour, 30 parts by weight of sugar, 50 parts by weight of margarine, 5 parts by weight of whole milk powder, 5 parts by weight of whole egg, 0.5 part by weight of table salt, 1 part by weight of sodium bicarbonate, 1 part by weight of ammonium carbonate, 0.2 parts by weight of vanilla essence, and 10 parts by weight of water were mixed and stirred to prepare a base material for cookie.

The base material for cookie was molded using the rotary molder in the same manner as Example 1. It was confirmed that the base material has excess softness and adhesiveness due to excess mount of lipid, whereby the base material is likely to be adhered to the mold and to show an undesired deformation. It was difficult to do the mold. In the process of depression of the lower base material into the lower mold cavity as well as in the process of adhesion between the upper and lower base materials, breaks of the upper and lower base materials appears, whereby the solid-state center material was not completely enclosed by the base material.

The base material includes 26.6 percents by weight of lipid, 19.4 percents by weight of carbohydrate and 6.1 percents by weight of protein.

The novel method of the present invention allows the desired mass production at high yield of the roasted confectionery containing the solid state center material which provides soft and crisp tastes, wherein even the base material is soft and includes large amounts of lipid and carbohydrate, no problem with the separation of lipid nor problem with excess adhesiveness are raised.

## Claims

1. A method of preparing a roasted confectionery containing a solid state center material, said method comprising :
(1) a first step of forming a first piece of base material having a solid-state composition including 10-25 percents by weight of lipid and 14-30 percents by weight of carbohydrate and having a generally uniform thickness ;
(2) a second step of placing said first piece of base material over a lower mold die with a lower mold cavity so that a center of said first piece of base material is generally aligned to a center of said lower mold cavity ;
(3) a third step of depressing a center of said first piece of base material into said lower mold cavity with leaving a periphery of said first piece of base material positioned outside said lower mold cavity, so as to form a depressed portion at said center of said first piece of base material ;
(4) a fourth step of placing a solid state center material over said depressed portion of said first piece of base material ;
(5) a fifth step of placing a second piece of base material over said solid state center material so that said second piece of base material superimposes said first piece of base material, wherein said second piece of base material has a solid-state composition including 10-25 percents by weight of lipid and 14-30 percents by weight of carbohydrate and said second piece of base material has generally similar shape and size to said first piece of base material ;
(6) a sixth step of causing a upper mold die with an upper mold cavity to press down said second piece of base material toward said lower mold die, so as to adhere said first and second pieces of base material with each other to form an outer layer completely containing said solid state center material, thereby to form a molded structure with a shape defined by said lower and upper mold cavities ;
(7) a seventh step of cutting peripheral portions of said first and second pieces of base material, wherein said peripheral portions are positioned outside said lower and upper mold cavities ;
(8) an eighth step of releasing said molded structure from said lower and upper mold cavities ; and
(9) a ninth step of roasting said molded structure to prepare a roasted confectionery containing said solid state center material.

2. The method as claimed in claim 1, wherein said third and fourth steps are carried out simultaneously by placing a solid state center material over said depressed portion of said first piece of base material and pressing down said solid state center material toward said lower mold cavity, so as to form said depressed portion of said first piece of base material.

3. The method as claimed in claim 1 or 2, wherein said sixth and seventh steps are carried out simultaneously.

4. The method as claimed in any one of claims 1-3, wherein said molded structure is molded by a rotary molder.

5. The method as claimed in any one of claims 1-4, wherein at least one of said lower and upper mold cavities has one selected from the group consisting of a semi-spherical shape, a semi-oval shape, a dome-shape, a lens-shape, a nut-shape, or a straw rice-bag shape.

6. The method as claimed in any one of claims 1-5, wherein said solid state center material is selected from the group consisting of a nut, a seed, a molded lipid confectionery, a starch-based roasted confectionery, a grain-based roasted confectionery, and a sugar-coated confectionery.

## Patentansprüche

1. Verfahren zur Herstellung gerösteter Konfekte mit einem festen Kern, wobei das Verfahren umfasst:
(1) als ersten Schritt die Herstellung eines ersten Stücks eines Basismaterials mit einer festen Zusammensetzung, enthaltend 10-25 Gew.-% Fette und 14-30 Gew.-% Kohlenhydrate, das eine allgemein gleiche Dicke aufweist;
(2) einen zweiten Schritt, bei dem das Material in ein unteres Formwerkzeug mit einem unteren Formhohlraum gelegt wird, so dass die Mitte des ersten Stücks des Basismaterials im Allgemeinen zu der Mitte des unteren Formhohlraums ausgerichtet ist;
(3) einen dritten Schritt, bei dem die Mitte des ersten Stücks des Basismaterials in den unteren Formhohlraum gepresst wird, wobei ein peripherer Bereich des ersten Stücks des Basismaterials außerhalb des unteren Formhohlraums verbleibt, um **dadurch** einen vertieften Teil in der Mitte des ersten Stücks des Basismaterials zu bilden;
(4) einen vierten Schritt, bei dem ein fester Kern über den vertieften Teil des ersten Stücks des Basismaterials gelegt wird;
(5) einen fünften Schritt, bei dem ein zweites Stück des Basismaterials über den festen Kern gelegt wird, so dass das zweite Stück des Basismaterials über dem ersten Stück des Basismaterials zu liegen kommt, wobei das zweite Stück des Basismaterials eine feste Zusammensetzung hat und 10-25 Gew.-% Fette und 14-30 Gew.-% Kohlenhydrate enthält und das zweite Stück des Basismaterials eine im Allgemeinen gleiche Form und Größe aufweist wie das erste Stück des Basismaterials;
(6) einen sechsten Schritt, bei dem das zweite Stück des Basismaterials durch ein oberes Formwerkzeug mit einem oberen Formhohlraum nach unten gegen das untere Formwerkzeug gepresst wird, um so das erste und das zweite Stück des Basismaterials miteinander zu verbinden und eine äußere Schicht zu bilden, die den festen Kern vollständig umgibt, wobei eine geformte Struktur mit einer durch den unteren und den oberen Formhohlraum vorgegebenen Form gebildet wird;
(7) einen siebten Schritt, bei dem die umgebenden Teile des ersten und des zweiten Stücks des Basismaterials abgetrennt werden, wobei die umgebenden Teile außerhalb der unteren und der oberen Formhohlräume liegen;
(8) einen achten Schritt, bei dem die geformte Struktur aus dem unteren und dem oberen Formhohlraum herausgelöst wird; und
(9) einen neunten Schritt, bei dem die geformte Struktur geröstet wird, um ein geröstetes Konfekt mit einem festen Kern zu bilden.

2. Verfahren nach Anspruch 1, wobei der dritte und vierte Schritt gleichzeitig durchgeführt werden, indem der feste Kern über den vertieften Teil des ersten Stücks des Basismaterials gelegt und der feste Kern gegen den unteren Formhohlraum nach unten gepresst wird, um so den vertieften Teil des ersten Stücks des Basismaterials zu bilden.

3. Verfahren nach Anspruch 1 oder 2, wobei der sechste und der siebte Schritt gleichzeitig durchgeführt werden.

4. Verfahren nach einem der Ansprüche 1-3, wobei die geformte Struktur in einer Drehform geformt wird.

5. Verfahren nach einem der Ansprüche 1-4, wobei die Form des unteren und/oder des oberen Formhohlraumes aus halbrund, halboval, domförmig, linsenförmig, nussförmig oder reisstrohbeutelförmig ausgewählt ist.

6. Verfahren nach einem der Ansprüche 1-5, wobei die Form des festen Kerns aus nussförmig, samenförmig, einem geformten Fett-Konfekt, einem gerösteten Konfekt auf Stärkebasis, einem gerösteten Konfekt auf Getreidebasis und einem mit Zucker überzogenen Konfekt ausgewählt ist.

## Revendications

1. Procédé de préparation d'une confiserie torréfiée comprenant un matériau formant noyau à l'état solide, ledit procédé comprenant :
(1) une première étape de formation d'un premier morceau de matériau de base ayant une composition à l'état solide comprenant de 10 à 25 % en poids de lipides et de 14 à 30 % en poids de glucides et ayant une épaisseur généralement uniforme ;
(2) une deuxième étape de placement dudit premier morceau de matériau de base au-dessus d'un moule inférieur avec une cavité inférieure de moule de manière à ce qu'un centre dudit premier morceau de matériau de base soit généralement aligné à un centre de ladite cavité inférieure de moule ;
(3) une troisième étape d'enfoncement d'un centre dudit premier morceau de matériau de base dans ladite cavité inférieure de moule en laissant une périphérie dudit premier morceau de matériau de base positionnée à l'extérieur de ladite cavité inférieure de moule, de sorte à former une partie enfoncée au centre dudit premier morceau de matériau de base ;
(4) une quatrième étape de placement d'un matériau formant noyau à l'état solide au-dessus de ladite partie enfoncée dudit premier morceau de matériau de base ;
(5) une cinquième étape de placement d'un second morceau de matériau de base au-dessus dudit matériau formant noyau à l'état solide de manière à ce que ledit second morceau de matériau de base soit superposé audit premier morceau de matériau de base, dans laquelle ledit second morceau de matériau de base a une composition à l'état solide comprenant de 10 à 25 % en poids de lipides et de 14 à 30 % en poids de glucides et ledit second morceau de matériau de base a une forme et une taille généralement similaires à celles dudit premier morceau de matériau de base ;
(6) une sixième étape consistant à ce que le moule supérieur avec une cavité supérieure de moule entraîne ledit second morceau de matériau de base vers ledit moule inférieur, de sorte à faire adhérer mutuellement lesdits premier et second morceaux de matériau de base pour former une couche externe entourant entièrement ledit matériau formant noyau à l'état solide, pour former ainsi une structure moulée avec une forme définie par lesdites cavités inférieure et supérieure de moule ;
(7) une septième étape consistant à découper des parties périphériques desdits premier et second morceaux de matériau de base, dans laquelle lesdites parties périphériques sont positionnées à l'extérieur desdites cavités inférieure et supérieure de moule ;
(8) une huitième étape consistant à dégager ladite structure moulée desdites cavités inférieure et supérieure de moule ; et
(9) une neuvième étape consistant à torréfier ladite structure moulée pour préparer une confiserie torréfiée contenant ledit matériau formant noyau à l'état solide.

2. Procédé selon la revendication 1, dans lequel lesdites troisième et quatrième étapes sont exécutées simultanément en plaçant un matériau formant noyau à l'état solide au-dessus de ladite partie enfoncée dudit premier morceau de matériau de base et en poussant ledit matériau formant noyau à l'état solide vers ladite cavité inférieure de moule, de manière à former ladite partie enfoncée dudit premier morceau de matériau de base.

3. Procédé selon la revendication 1 ou 2, dans lequel lesdites sixième et septième étapes sont exécutées simultanément.

4. Procédé selon l'une quelconque des revendications 1 à 3, dans lequel ladite structure moulée est moulée par une façonneuse rotative.

5. Procédé selon l'une quelconque des revendications 1 à 4, dans lequel au moins une desdites cavités inférieure et supérieure de moule a une forme choisie dans le groupe comprenant une forme hémisphérique, une forme semi-ovale, une forme de dôme, une forme lenticulaire, une forme de fruit sec ou une forme de sac de riz en paille.

6. Procédé selon l'une quelconque des revendications 1 à 5, dans lequel ledit matériau formant noyau à l'état solide est choisi dans le groupe comprenant un fruit sec, une graine, une confiserie moulée à base de lipides, une confiserie torréfiée à base d'amidon, une confiserie torréfiée à base de graines, et une confiserie dragéifiée.
